# EUROPÄISCHE PATENTANMELDUNG

(11) **EP 2 706 407 A2**
(43) Veröffentlichungstag der Anmeldung: **12.03.2014**
(21) Anmeldenummer: 13183119.0
(22) Anmeldetag: 05.09.2013
(51) Int. Cl.: G03B 3/12, G03B 13/34, H04N 5/232, G03B 17/18

(54) **Objektiv- und Kamera-Fernsteuereinheit**

(30) Priorität: 06.09.2012 DE 102012215861
(71) Anmelder: Arnold & Richter Cine Technik GmbH & Co. Betriebs KG, 80799 München (DE)
(72) Erfinder: Voss, Hendrik, 81673 München (DE); Preymann, Leonard, 2100 Korneuburg (AT)
(74) Vertreter: Manitz, Finsterwald & Partner GbR

(57) **Zusammenfassung**

Eine Objektiv- und Kamera-Fernsteuereinheit (10)umfasst ein Basisteil (12), ein relativ zum Basisteil bewegliches Bedienelement (18), eine Auswerte- und Steuereinrichtung zum Erzeugen eines Steuersignals entsprechend der Stellung des Bedienelements, und eine Ausgabeeinrichtung 54)zum Ausgeben des Steuersignals an eine zugeordnete Kamera. Die Auswerte- und Steuereinrichtung ist dazu angepasst, in Abhängigkeit von der Stellung des Bedienelements (18) eine Rückmeldeeinrichtung der Fernsteuereinheit (10) zur Erzeugung wenigstens eines von einem Benutzer wahrnehmbaren Rückmeldesignals anzusteuern.

## Beschreibung

Die Erfindung betrifft eine Objektiv- und Kamera-Fernsteuereinheit. Die Fernsteuereinheit umfasst zumindest ein Basisteil, ein relativ zum Basisteil bewegliches Bedienelement, eine Auswerte- und Steuereinrichtung zum Erzeugen eines Steuersignals entsprechend der Stellung des Bedienelements, und eine Ausgabeeinrichtung zum Ausgeben des Steuersignals an eine zugeordnete Kamera.

Eine derartige Fernsteuereinheit ermöglicht bei einer herkömmlichen oder elektronischen Laufbildkamera (Filmkamera) eine Fernsteuerung beispielsweise einer Fokuseinstelleinrichtung der Kamera durch einen Kameraassistenten. Entsprechend der Stellung des Bedienelements erzeugt die Auswerte- und Steuereinrichtung der Fernsteuereinheit ein Steuersignal und übermittelt dieses über die Ausgabeeinrichtung an die Fokuseinstelleinrichtung der Kamera (drahtlos oder drahtgebunden). Die Fokuseinstelleinrichtung weist hierbei eine Motoreinheit auf, die entsprechend dem von der Fernsteuereinheit übermittelten Steuersignal einen Objektivring verdreht und hierdurch eine Fokuseinstellung verändert.

Eine Fernsteuereinheit der genannten Art ist in der WO 2010/046237 A1 beschrieben. Diese Fernsteuereinheit weist ferner eine in ein Basisteil integrierte Anzeigeeinrichtung zur Anzeige einer Fokusskala und weiterer Symbole sowie ein seitlich angeordnetes Bedienelement (Stellrad) zum Einstellen des Fokus (Bildschärfe) auf. Die Fernsteuereinheit bietet die Möglichkeit des Voreinstellens bestimmter gewünschter Fokuswerte, welche mit ausgemessenen Abständen im Motiv übereinstimmen. Typischerweise wird die Fernsteuereinheit während einer Filmaufnahme mit der Kamera von dem Kameraassistenten bedient, wobei der Kameraassistent die erforderlichen ferngesteuerten Einstellungen an dem Kameraobjektiv gemäß einem Steuerungsablauf vornimmt, der vor der Filmaufnahme von dem Kameramann oder in Absprache mit dem Kameramann festgelegt wurde. Die den erwünschten Steuerungsablauf festlegenden Parameter (z.B. Anfangswert und/oder Endwert) werden an oder in der Fernsteuereinheit als Voreinstellungen vermerkt, wobei diese Voreinstellungen elektronisch eingegeben und gespeichert oder auch lediglich als von Hand angebrachte Markierungen angebracht werden können.

Um während der Filmaufnahme den zuvor festgelegten Steuerungsablauf möglichst gut einzuhalten, muss der Kameraassistent die sich vor ihm abspielende Filmszene permanent im Auge behalten. Zugleich aber muss er die Stellung des Bedienelements der Fernsteuereinheit, insbesondere relativ zu einer jeweiligen Voreinstellung, überwachen, was möglichst ohne störende Ablenkung von der Filmszene und ohne Beeinträchtigung der Filmaufnahme erfolgen soll. Die Überwachung der Stellung muss zudem auch unter ungünstigen Lichtverhältnissen zuverlässig möglich sein.

Es ist eine Aufgabe der Erfindung, eine Objektiv- und Kamera-Fernsteuereinheit der genannten Art noch weiter zu verbessern, insbesondere hinsichtlich der Möglichkeit einer weder die Filmaufnahme störenden noch von der aufzunehmenden Filmszene ablenkenden Überwachung der Stellung des Bedienelements der Fernsteuereinheit.

Die Lösung dieser Aufgabe erfolgt durch die Merkmale des Anspruchs 1 und insbesondere dadurch, dass die Objektiv- und Kamera-Fernsteuereinheit eine Rückmeldeeinrichtung umfasst, wobei die Auswerte- und Steuereinrichtung dazu angepasst ist, in Abhängigkeit von der Stellung des Bedienelements die Rückmeldeeinrichtung zur Erzeugung wenigstens eines von einem Benutzer der Fernsteuereinheit wahrnehmbaren Rückmeldesignals anzusteuern, bei dem es sich insbesondere um ein optisches oder haptisches Rückmeldesignal handeln kann.

Die erfindungsgemäße Fernsteuereinheit weist somit eine Rückmeldeeinrichtung auf, die dazu angepasst ist, Rückmeldesignale zu erzeugen, die von dem die Fernsteuereinheit haltenden Benutzer sensorisch wahrgenommen werden können. Bei den genannten Rückmeldesignalen kann es sich beispielsweise um optische Signale (wie etwa Intensitäts- oder Farbänderungen) oder haptische Signale (wie etwa mechanische Schwingungen) handeln, wie nachfolgend noch näher erläutert wird. Unter einer Erzeugung der jeweiligen Signale ist dabei zu verstehen, dass das Rückmeldesignal auf die Ansteuerung der Rückmeldeeinrichtung zurückzuführen ist und sich nicht lediglich aus der Stellung des Bedienelements unmittelbar ergibt.

Wenn also aufgrund einer Betätigung des Bedienelements relativ zum Basisteil eine voreingestellte Stellung erreicht oder eine bestimmte Annäherung an eine voreingestellte Stellung erfolgt ist, kann dies von einer Auswerte- und Steuereinrichtung detektiert und dem Benutzer (z.B. Kameraassistenten) mittels des entsprechend erzeugten Rückmeldesignals auf wahrnehmbare Weise angezeigt werden, ohne dass der Benutzer beispielsweise ständig eine Werteskala mit einer Ablesemarke vergleichen muss. Der Benutzer kann sich somit auf die aufzunehmende Filmszene konzentrieren, ohne ständig auf die Fernsteuereinheit blicken zu müssen, da das jeweilige Rückmeldesignal beispielsweise ganz ohne Blickwechsel haptisch spürbar oder im peripheren Gesichtsfeld erkennbar ist, oder da ein lediglich kurzer Blick für die Signalerkennung ausreicht. Insbesondere kann das jeweilige Signal so dezent sein, dass weder der akustische noch der visuelle Anteil der Filmaufnahme durch das Signal beeinträchtigt wird.

Abgesehen von der Rückmeldeeinrichtung kann die Fernsteuereinheit wie in der WO 2010/046237 A1 beschrieben ausgebildet sein. Insbesondere kann das Bedienelement relativ zu dem Basisteil um eine Drehachse drehbar sein und kann die genannte Stellung des Bedienelements dann eine Drehstellung des Bedienelements sein. Beispielsweise kann es sich bei dem Bedienelement um ein Stellrad handeln. Alternativ ist es möglich, dass das Bedienelement relativ zu dem Basisteil translatorisch beweglich ist. Insbesondere kann das Bedienelement entlang einer Strecke verschiebbar sein, wobei die genannte Stellung des Bedienelements dann eine Schiebestellung des Bedienelements sein kann. Die Strecke, entlang der das Bedienelement verschiebbar ist, muss nicht zwangsläufig gerade sein. Vorzugsweise handelt es sich jedoch um eine zumindest im Wesentlichen gerade Strecke. In diesem Fall ist die Bewegung des Bedienelements also eine geradlinige Bewegung, wie es etwa bei einem Schieberegler für eine Blendeneinstelleinrichtung der Fall sein kann.

Das von dem Benutzer wahrnehmbare Rückmeldesignal ist vorzugsweise ein lediglich in diskreten Stufen veränderliches Signal. Insbesondere kann es sich um ein binäres Signal handeln, d.h. bei dieser Ausführungsform kann das Rückmeldesignal lediglich zwei verschiedene Zustände einnehmen. Beispielsweise kann vorgesehen sein, dass erst bei Erreichen einer voreingestellten Stellung des Bedienelements das Rückmeldesignal überhaupt erzeugt wird und andernfalls das Rückmeldesignal nicht oder nicht in wahrnehmbarer Weise erzeugt wird. Ein lediglich in diskreten Stufen veränderliches Rückmeldesignal hat gegenüber einem kontinuierlich veränderlichen Signal generell den Vorteil, dass der Benutzer eine Änderung des Rückmeldesignals deutlicher wahrnehmen kann, insbesondere wenn er die Fernsteuereinheit und speziell deren Rückmeldeeinrichtung nicht gezielt beobachtet.

Gemäß einer vorteilhaften Ausführungsform ist die Auswerte- und Steuereinrichtung dazu angepasst, in Abhängigkeit von der Stellung des Bedienelements die Rückmeldeeinrichtung zur Erzeugung von unterschiedlichen Rückmeldesignalen anzusteuern. Die Rückmeldesignale können sich beispielsweise in ihrer Dauer (z.B. kurz/lang), ihrer Intensität (z.B. stark/schwach oder hell/fahl), ihrer Frequenz (z.B. Schwingungsfrequenz bzw. Farbe) und/oder ihrer Anzahl und zeitlicher Abfolge (z.B. spezielle Pulsfolgen) unterscheiden. Somit können durch Verwendung unterschiedlicher Rückmeldesignale dem Benutzer verschiedene Zustände signalisiert werden, beispielsweise zum einen das Annähern an einen voreingestellten gewünschten Fokuswert (Unterschreiten eines bestimmten Abstands zu dem voreingestellten gewünschten Fokuswert) und zum anderen das tatsächliche Erreichen des voreingestellten gewünschten Fokuswerts (nach fortgesetzter Bewegung des Bedienelements).

Insbesondere kann die Auswerte- und Steuereinrichtung dazu angepasst sein, bei Erreichen einer vorbestimmten (vom Benutzer einstellbaren) ersten Stellung des Bedienelements die Rückmeldeeinrichtung zur Erzeugung eines ersten Rückmeldesignals anzusteuern. Bei Erreichen wenigstens einer vorbestimmten (ebenfalls vom Benutzer einstellbaren) zweiten Stellung des Bedienelements und/oder bei Erreichen wenigstens eines vorbestimmten (vom Benutzer einstellbaren) Unterschieds der Stellung des Bedienelements relativ zu der vorbestimmten ersten Stellung steuert die Auswerte- und Steuereinrichtung die Rückmeldeeinrichtung zur Erzeugung eines zweiten Rückmeldesignals an, welches sich von dem ersten Rückmeldesignal unterscheidet. Somit können beispielsweise zusätzlich zu einem gewünschten Fokuswert ein oder mehrere Grenzwerte hierzu ("Limits") eingestellt werden, wobei das Erreichen des oder der Grenzwerte zum Beispiel durch ein einmaliges oder mehrmaliges kurzes Rückmeldesignal und das Erreichen des gewünschten Fokuswerts durch ein langes oder dauerhaftes Rückmeldesignal signalisiert werden. Bei dem genannten Stellungsunterschied kann es sich je nach Art der Bewegung des Bedienelements beispielsweise um einen Drehwinkelabstand oder einen Verschiebeabstand handeln.

Weiterhin ist es bevorzugt, wenn die Auswerte- und Steuereinrichtung dazu angepasst ist, über einen Bereich von verschiedenen Stellungen des Bedienelements die Rückmeldeeinrichtung zur Erzeugung eines Rückmeldesignals anzusteuern. Auf diese Weise können nicht nur voreingestellte einzelne Werte der Stellung (z.B. entsprechend verschiedenen Fokuswerten), sondern ganze Wertebereiche zu jedem Zeitpunkt, in dem die Stellung des Bedienelements diesem Bereich entspricht, signalisiert werden (z.B. durch Änderung einer Beleuchtungsfarbe). Dabei kann das Rückmeldesignal innerhalb des genannten Bereichs kontinuierlich von der Stellung des Bedienelements abhängig sein und sich beispielsweise in seiner Intensität oder Frequenz (z.B. Frequenz einer mechanischen Schwingung, Farbe) verändern.

Besonders vorteilhaft ist es, wenn die Rückmeldeeinrichtung eine Vibrationseinrichtung umfasst, die zur Erzeugung eines von dem Benutzer der Fernsteuereinheit fühlbaren Vibrationssignals ansteuerbar ist. Das Vibrationssignal bildet somit das genannte Rückmeldesignal. Als Vibration wird im Zusammenhang mit der Erfindung eine einzige Hin- und Herbewegung oder mehrere aufeinander folgende Hin- und Herbewegungen (d.h. mechanische Schwingungen) eines Teils relativ zu einem anderen Teil der Fernsteuereinheit bezeichnet. Vibrationen eignen sich besonders gut als Signale in einem Umfeld, in dem visuelle und akustische Signale Störungen darstellen würden. Zudem ist die Wahrnehmbarkeit von Vibrationen in der Regel auf diejenige Person beschränkt, die unmittelbaren Kontakt zu den Vibrationen hat.

Wenn beispielsweise aufgrund einer Betätigung des Bedienelements ein voreingestellter gewünschter Fokuswert erreicht wird oder eine bestimmte Annäherung an einen voreingestellten gewünschten Fokuswert erfolgt ist, kann dies vorteilhafterweise lediglich dem Benutzer (z.B. Kameraassistenten) mittels der erzeugten Vibrationen auf wahrnehmbare Weise angezeigt werden, ohne dass die Filmaufnahme durch visuelle oder akustische Signale gestört wird. Bei der hierfür benötigten Vibrationseinrichtung handelt es sich um ein kostengünstiges Bauelement, wie es beispielsweise für Mobiltelefone weithin üblich ist. Insbesondere kann die Vibrationseinrichtung durch einen Elektromotor mit einer hiervon angetriebenen Unwucht (sogenannter Vibrationsmotor) gebildet sein. Auch ein Piezo-Antrieb ist beispielsweise möglich.

Gemäß einer vorteilhaften Ausführungsform ist die Vibrationseinrichtung an einer Außenseite des Basisteils oder des Bedienelements angeordnet. Hierdurch ist das von der Vibrationseinrichtung erzeugte Vibrationssignal vom Benutzer besonders gut fühlbar, während die Stärke der Vibrationen gleichwohl so gering eingestellt sein kann, dass die Vibrationen akustisch nicht wahrnehmbar sind und auch die Betätigung des Bedienelements nicht beeinträchtigen. Wenn die Vibrationseinrichtung an einer Außenseite des Basisteils angeordnet ist, spürt der Benutzer das Vibrationssignal im Wesentlichen an derjenigen Hand, mit der er das Basisteil festhält, so dass die andere, das Bedienelement betätigende Hand vorteilhafterweise nicht in ihrer Betätigung gestört wird. Alternativ kann es vorteilhaft sein, wenn die Vibrationseinrichtung an einer Außenseite des Bedienelements angeordnet ist, da in diesem Fall die das Bedienelement betätigende Hand besonders unmittelbar eine Rückmeldung zu der von ihr ausgeführten Verstellbewegung erfährt.

Optional kann die Vibrationseinrichtung von dem Basisteil und/oder dem Bedienelement weitestgehend Körperschall-entkoppelt sein. Beispielsweise kann zwischen der Vibrationseinrichtung und dem Basisteil und/oder dem Bedienelement eine Dämpfungseinrichtung oder eine Feder-/Dämp-fungseinrichtung vorgesehen sein.

Alternativ oder zusätzlich zu der genannten Vibrationseinrichtung kann die Rückmeldeeinrichtung eine Beleuchtungseinrichtung umfassen, die zur Erzeugung eines von einem Benutzer sichtbaren Beleuchtungssignals ansteuerbar ist. Das Beleuchtungssignal entspricht hierbei dem genannten Rückmeldesignal und kann grundsätzlich alle Arten von direkt oder indirekt ausgesandtem Licht umfassen. Das Beleuchtungssignal kann insbesondere durch seine Intensität, Farbe, Dauer, Anzahl und Abfolge und/oder durch eine Änderung dieser Merkmale charakterisiert sein. Auf diese Weise können das Beleuchtungssignal und die entsprechende Information über die Stellung des Bedienelements schnell und zuverlässig durch einen kurzen Blick oder durch peripheres Sehen zuverlässig wahrgenommen werden. Merkmale oder Merkmalsänderungen des Beleuchtungssignals können insbesondere daraufhin optimiert gewählt sein, wie gut sie im peripheren Gesichtsfeld wahrnehmbar sind. Die Beleuchtungseinrichtung kann eine Lichtquelle aufweisen, die beispielsweise eine oder mehrere, insbesondere verschiedenfarbige oder farbmodulierbare, Leuchtdioden (LEDs) umfasst. Ferner kann die Beleuchtungseinrichtung z.B. an einer Außenseite oder innerhalb des Basisteils oder des Bedienelements der Fernsteuereinheit angeordnet sein.

Insbesondere kann die Beleuchtungseinrichtung dazu angepasst sein, die Fernsteuereinheit zumindest teilweise gemäß einer Grundbeleuchtungscharakteristik zu beleuchten, wobei das Beleuchtungssignal eine von der Grundbeleuchtungscharakteristik verschiedene Beleuchtungscharakteristik aufweisen kann, beispielsweise eine andere Farbe. Wenn z.B. ein voreingestellter gewünschter Fokuswert erreicht wird oder eine bestimmte Annäherung an einen voreingestellten gewünschten Fokuswert erfolgt ist, kann sich die Farbe der Beleuchtung, etwa von weiß zu grün, oder die Intensität der Beleuchtung, etwa durch (einmaliges oder mehrmaliges) kurzzeitiges Erlöschen oder Aufleuchten, ändern. Durch eine derartige Änderung der Beleuchtungscharakteristik ist das Beleuchtungssignal eindeutig von der Grundbeleuchtungscharakteristik zu unterscheiden. Mehrere verschiedene Beleuchtungscharakteristiken ermöglichen die Unterscheidung verschiedener voreingestellter gewünschter Einstellwerte, so dass beispielsweise das Erreichen eines Grenzwerts durch ein Beleuchtungssignal einer anderen Farbe signalisiert werden kann als das Erreichen eines voreingestellten gewünschten Einstellwerts.

Vorteilhafterweise kann die Beleuchtungseinrichtung der allgemeinen Beleuchtung der Fernsteuereinheit dienen, insbesondere der Beleuchtung des Bedienelements und/oder einer Anzeigeeinrichtung der Fernsteuereinheit. Diese allgemeine Beleuchtung kann dann, beispielsweise bezüglich ihrer Intensität und Farbe, eine Grundbeleuchtungscharakteristik aufweisen, von der sich die Beleuchtungscharakteristik des Beleuchtungssignals vorteilhafterweise unterscheidet.

Die Fernsteuereinheit kann generell eine Anzeigeeinrichtung zum Anzeigen wenigstens eines Symbols aufweisen (z.B. Skala, Skalenstrich, Zahl, Pfeil), dessen Position oder Wert der Stellung des Bedienelements oder einer gewünschten Stellung des Bedienelements entspricht. Die Anzeigeeinrichtung (z.B. Skalenleiste, Skalenzylinder, von Hand beschriftbare Markierscheibe) kann grundsätzlich an dem Basisteil oder an dem Bedienelement vorgesehen sein. Die genannte Beleuchtungseinrichtung kann eine derartige Anzeigeeinrichtung teilweise oder vollständig beleuchten. Die Beleuchtungseinrichtung kann insbesondere Teil einer derartigen Anzeigeeinrichtung sein.

Bei einer derartigen Ausführungsform mit Beleuchtungseinrichtung und Anzeigeeinrichtung kann die Beleuchtungseinrichtung eine Hintergrundbeleuchtung für die Anzeigeeinrichtung erzeugen.

Alternativ oder zusätzlich kann die Fernsteuereinheit bei einer derartigen Ausführungsform eine Abdeckeinrichtung aufweisen, die wenigstens einen transparenten oder teiltransparenten Abschnitt und einen lichtundurchlässigen Abschnitt aufweist, um die von der Beleuchtungseinrichtung erzeugte Beleuchtung der Anzeigeeinrichtung (z.B. Beleuchtungssignal und/oder Hintergrundbeleuchtung) für unterschiedliche Emissionsrichtungen der Beleuchtung oder für unterschiedliche Bereiche der Anzeigeeinrichtung selektiv entweder durchzulassen oder abzuschirmen. Hierdurch kann die Lichtemission auf einen engen Winkelbereich begrenzt werden, der für den Benutzer der Fernsteuereinheit ausreichend ist und für die Umgebung (z.B. aufgenommene Filmszene) jedoch keine Störung bedeutet. Dies gilt insbesondere für Anzeigeeinrichtungen, die nicht eben, sondern beispielsweise zylinderförmig ausgebildet sind. Zwischen dem jeweiligen transparenten oder teiltransparenten Abschnitt und dem jeweiligen lichtundurchlässigen Abschnitt der Abdeckeinrichtung ist vorzugsweise ein kontinuierlicher Verlauf des Transparenzgrades vorgesehen, um abrupte Übergänge zu vermeiden. Der Benutzer nimmt die Bewegung beispielsweise eines bestimmten Skalenwerts in den sichtbaren Teil der Anzeigeeinrichtung somit als ein allmähliches Erscheinen wahr.

Generell ist es bevorzugt, wenn die Rückmeldeeinrichtung das genannte Rückmeldesignal erzeugt, ohne hierbei einer Bewegung des Bedienelements relativ zum Basisteil entgegenzuwirken (z.B. durch einen abrupten oder allmählichen Bewegungswiderstand). Somit erfolgt die sensorische Rückmeldung an den Benutzer ohne Beeinträchtigung der Betätigung des Bedienelements, so dass eine besonders exakte Steuerung möglich ist. Dies ist beispielsweise dann gewährleistet, wenn die Rückmeldeeinrichtung eine Vibrationseinrichtung oder eine Beleuchtungseinrichtung umfasst.

Alternativ hierzu kann die Rückmeldeeinrichtung allerdings beispielsweise eine Rastschlusserzeugungseinrichtung umfassen, die zur selektiven Erzeugung eines von einem Benutzer fühlbaren Rastschlusses des Bedienelements mit dem Basisteil ansteuerbar ist. Unter einem derartigen Rastschluss ist ein Bewegungswiderstand zu verstehen, der kurzzeitig überwunden werden muss, um die Betätigung des Bedienelements fortzusetzen. Ein derartiger Rastschluss kann beispielsweise durch eine elektromagnetische Kopplung des Bedienelements mit dem Basisteil selektiv erzeugt werden.

Bei sämtlichen der vorgenannten Ausführungsformen kann eine Anzeigeeinrichtung der Fernsteuereinheit (insbesondere die bereits genannte Anzeigeeinrichtung) als eine elektronische Anzeigeeinrichtung zum elektronischen Darstellen wenigstens eines Symbols ausgebildet sein, wobei die Auswerte- und Steuereinrichtung dazu angepasst ist, die Position oder den Wert des dargestellten Symbols in Abhängigkeit von einer Änderung der Stellung des Bedienelements zu verändern und die Rückmeldeeinrichtung zur Erzeugung des Rückmeldesignals anzusteuern, wenn die Stellung des Bedienelements einer vorbestimmten Position des dargestellten Symbols auf der elektronischen Anzeigeeinrichtung oder einem vorbestimmten Wert des dargestellten Symbols entspricht. Die genannte elektronische Anzeigeeinrichtung kann flach und rechteckig (wie in der WO 2010/046237 A1) oder rund, beispielsweise zylindrisch, ausgebildet sein. Das dargestellte Symbol kann insbesondere eine Skala (z.B. Fokusskala), eine Zahl (z.B. momentan eingestellter Fokuswert, gewünschter Fokuswert) und/oder wenigstens eine Markierung (z.B. Pfeilmarkierung für voreingestellten gewünschten Fokuswert) umfassen.

Generell kann die Position oder der Wert eines Symbols, das an einer Anzeigeeinrichtung von Hand angebracht ist oder das an einer Anzeigeeinrichtung elektronisch dargestellt wird, einen Einstellwert definieren (z.B. momentan eingestellter Fokuswert), wobei das von der Auswerte- und Steuereinrichtung erzeugte Steuersignal für die Kamera den Einstellwert enthält. Es ist bevorzugt, wenn an dem Basisteil eine der Anzeigeeinrichtung zugeordnete Ablesemarke vorgesehen ist oder wenn die elektronische Anzeigeeinrichtung zum Darstellen einer Ablesemarke angepasst ist. In beiden Fällen kann die Relativposition des angezeigten oder elektronisch dargestellten Symbols in Bezug auf die Ablesemarke den genannten Einstellwert definieren. Ferner kann die Relativposition des angezeigten oder elektronisch dargestellten Symbols in Bezug auf die Ablesemarke dem genannten Kriterium für das Ansteuern der Rückmeldeeinrichtung zur Erzeugung des Rückmeldesignals entsprechen.

Gemäß einer weiteren vorteilhaften Ausführungsform kann die Fernsteuereinheit einen mit der Auswerte- und Steuereinrichtung verbundenen Positionsgeber zum Erfassen der Stellung des Bedienelements relativ zum Basisteil aufweisen. Vorzugsweise handelt es sich hierbei um einen Absolutwert-Positionsgeber, im beispielhaften Fall eines um eine Drehachse drehbaren Bedienelements etwa um einen Absolutwert-Drehgeber. Dies bedeutet, dass jeder Stellung des Bedienelements relativ zum Basisteil ein eindeutiges Positionssignal zugeordnet ist, ohne dass nach jedem Einschalten der Fernsteuereinheit eine eigene Kalibrierung erforderlich ist. Es ist außerdem bevorzugt, wenn das Bedienelement relativ zum Basisteil innerhalb des vorgesehenen Betätigungsbereichs frei beweglich ist, d.h. ohne Rückstellkräfte, welche das Bedienelement in Richtung einer Nullstellung beaufschlagen.

Die genannte Ausgabeeinrichtung der Fernsteuereinheit kann eine beliebige Schnittstelle zum Ausgeben des erzeugten Steuersignals an die Kamera umfassen. Generell kann die Fernsteuereinheit für ein drahtgebundenes oder drahtloses Übermitteln des genannten Steuersignals an eine Empfangseinrichtung der Kamera (z.B. Fokuseinstelleinrichtung) ausgebildet sein.

Das von der Fernsteuereinheit erzeugte Steuersignal kann ein Fokussteuersignal zum Steuern einer Fokuseinstelleinrichtung und/oder ein Blendensteuersignal zum Steuern einer Blendeneinstelleinrichtung und/oder ein Brennweitensteuersignal zum Steuern einer Brennweiteneinstelleinrichtung (Zoomvorrichtung) einer Laufbildkamera umfassen.

Die Erfindung wird nachfolgend beispielhaft anhand der Figuren erläutert.
- Fig. 1: zeigt eine Seitenansicht einer ersten Ausführungsform einer Fernsteuereinheit.
- Fig. 2: zeigt eine Längsschnittansicht einer zweiten Ausführungsform einer Fernsteuereinheit.
- Fig. 3: zeigt ein Blockschaltbild der in Fig. 1 gezeigten Ausführungsform einer Fernsteuereinheit.
- Fig. 4: zeigt ein Blockschaltbild der in Fig. 2 gezeigten Ausführungsform einer Fernsteuereinheit.
- Fig. 5: zeigt ein Blockschaltbild einer weiteren Ausführungsform einer Fernsteuereinheit.

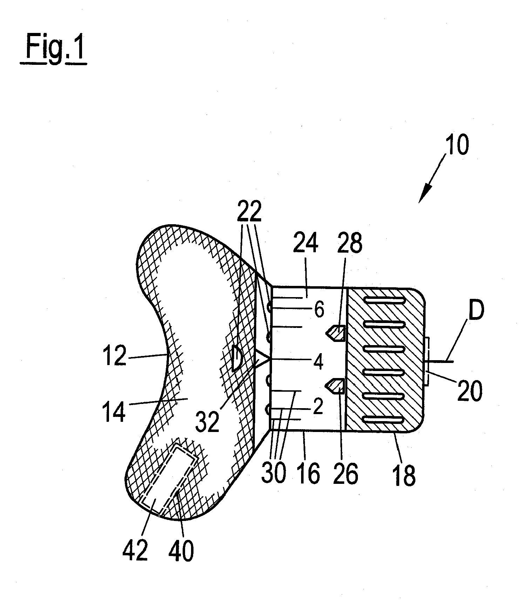

Fig. 1 zeigt eine Ausführungsform einer erfindungsgemäßen Fernsteuereinheit 10 mit einem Basisteil 12, das ein Griffteil 14 aufweist. Seitlich am Griffteil 14 sind eine zylinderförmige elektronische Anzeigeeinrichtung 16 und hieran angrenzend ein zylinderförmiges Bedienelement 18 angeordnet. Das Bedienelement 18 ist relativ zum Basisteil 12 um eine Drehachse D drehbar. An einer Stirnfläche des Bedienelements 18 kann eine gestrichelt dargestellte Taste 20 als Eingabeeinrichtung vorgesehen sein. Am Basisteil 12 können Leuchtdioden (LEDs) 22 zur Beleuchtung der elektronischen Anzeigeeinrichtung 16 vorgesehen sein. Die Anzeigeeinrichtung 16 kann an dem Bedienelement 18 angeordnet (d.h. sich mit diesem mitbewegend) oder mit dem Basisteil 12 fest verbunden sein.

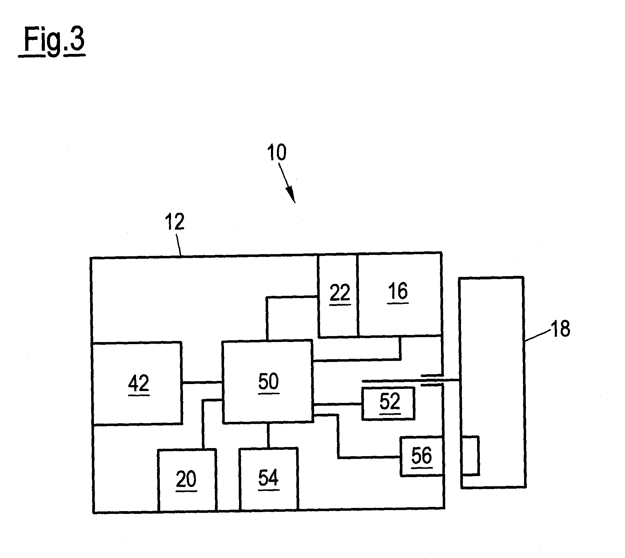

Die Fernsteuereinheit 10 weist zudem eine im Bereich des Basisteils 12 vorgesehene Auswerte- und Steuereinrichtung 50 (Fig. 3 bis 5; in Fig. 1 nicht dargestellt) auf, welche zur drahtlosen Kommunikation mit einer Fokuseinstelleinrichtung einer Laufbildkamera ausgebildet ist. Zu diesem Zweck ist die Auswerte- und Steuereinrichtung 50 mit einer Ausgabeeinrichtung 54 (Fig. 3 bis 5; in Fig. 1 nicht dargestellt) verbunden, die hier durch eine Funksendeeinrichtung gebildet ist. Die Auswerte- und Steuereinrichtung 50 ist ferner mit einem Positionsgeber 52 (Fig.3 bis 5; in Fig. 1 nicht dargestellt) zum Erfassen einer Winkelposition (einschließlich einer Winkelpositionsänderung) des Bedienelements 18 relativ zum Basisteil 12 verbunden. Die Auswerte- und Steuereinrichtung 50 ist dazu angepasst, in Abhängigkeit von der erfassten Winkelposition des Bedienelements 18 ein Fokussteuersignal zu erzeugen und über die genannte Funksendeeinrichtung an die Fokuseinstelleinrichtung der Kamera zu übermitteln.

Ferner steuert die Auswerte- und Steuereinrichtung 50 die elektronische Anzeigeeinrichtung 16 zum elektronischen Darstellen einer Fokusskala 24 an. Die Fokusskala 24 umfasst verschiedene Fokuswerte 30, welche in Form von beschrifteten und unbeschrifteten Skalenstrichen dargestellt sind. Weiterhin umfasst die Fokusskala 24 bei dem hier gezeigten Ausführungsbeispiel zwei Fokuswertmarkierungen 26, 28, welche dem Benutzer jeweils einen voreingestellten gewünschten Fokuswert anzeigen. Die Fokuswertmarkierungen 26, 28 können in einem Konfigurationsmodus der Fernsteuereinheit 10 vom Benutzer unter Zuhilfenahme der Taste 20 frei wählbar einprogrammiert werden. Die Auswerte- und Steuereinrichtung 50 ist dazu angepasst, bei einem Verdrehen des Bedienelements 18 relativ zu dem Basisteil 12 die Darstellung der Position der Fokusskala 24 einschließlich der Fokuswertmarkierungen 26, 28 relativ zu einer am Basisteil 12 vorgesehenen pfeilförmigen Ablesemarke 32 zu verändern. Die Position der Fokusskala 24 relativ zu der Ablesemarke 32 repräsentiert somit den momentan eingestellten Fokuswert (entsprechend dem aktuell an die Kamera übermittelten Fokussteuersignal). Die Position der jeweiligen Fokuswertmarkierung 26, 28 relativ zu der Ablesemarke 32 zeigt dem Benutzer den noch verbleibenden Abstand (Drehwinkel) zwischen dem jeweiligen voreingestellten gewünschten Fokuswert und dem momentan eingestellten Fokuswert an.

In einer Vertiefung 40 des Griffteils 14 ist eine bis zu der Außenseite des Griffteils 14 reichende Vibrationseinrichtung 42 vorgesehen, welche als eine Rückmeldeeinrichtung für den Benutzer dient. Die genannte Auswerte- und Steuereinrichtung 50 ist dazu angepasst, in Abhängigkeit von der detektierten Drehstellung des Bedienelements 18 relativ zu dem Basisteil 12 die Vibrationseinrichtung 42 zum Erzeugen eines vom Benutzer fühlbaren Vibrationssignals anzusteuern. Insbesondere veranlasst die Auswerte- und Steuereinrichtung die Vibrationseinrichtung 42 zum Erzeugen von Vibrationen, wenn eine Drehbetätigung des Bedienelements 18 dergestalt erfolgt ist, dass eine der beiden an der elektronischen Anzeigeeinrichtung 16 dargestellten Fokuswertmarkierungen 26, 28 auf Höhe der Ablesemarke 32 angelangt ist. Der Benutzer kann die Fernsteuereinheit 10 somit "blind" bedienen und wird dennoch zuverlässig auf das Erreichen des jeweiligen voreingestellten gewünschten Fokuswerts aufmerksam gemacht, ohne dass von der Fernsteuereinheit 10 eine wahrnehmbare Störung auf die Umgebung ausgeht.

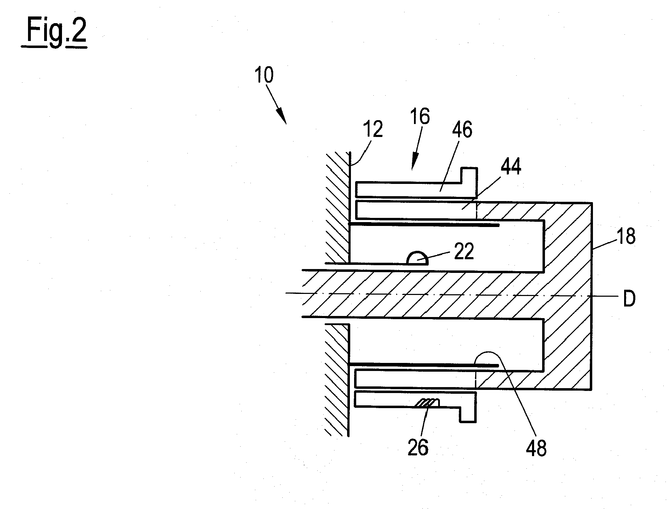

Fig. 2 zeigt in einem schematischen Längsschnitt ein Bedienelement 18 einer weiteren Ausführungsform einer Fernsteuereinheit 10, wobei von der Fernsteuereinheit 10 selbst lediglich ein Abschnitt eines Basisteils 12 dargestellt ist. Das Bedienelement 18 ist im Wesentlichen zylinderförmig und in seinem Inneren zumindest teilweise hohl. Über einen Schaft ist das Bedienelement 18 um eine Drehachse D drehbar an dem Basisteil 12 gelagert. Die zylinderförmige Außenseite des Bedienelements 18 umfasst einen Anzeigeabschnitt 44, an dem ein abnehmbarer und verstellbarer zylindrischer Markierring 46 angeordnet ist. Der Markierring 46 ist insbesondere dazu geeignet, voreingestellte gewünschte Fokuswerte zu definieren und anzuzeigen. Der Anzeigeabschnitt 44 und der Markierring 46 bilden somit eine Anzeigeeinrichtung 16 zum Anzeigen von eingestellten und/oder gewünschten Fokuswerten. Beispielhaft trägt der Markierring 46 eine Fokuswertmarkierung 26.

Im Inneren des Bedienelements 18 ist wenigstens eine fest mit dem Basisteil 12 verbundene Leuchtdiode 22 angeordnet, deren Lichtemission von einer zugeordneten Auswerte- und Steuereinrichtung 50 (Fig. 3 bis 5; in Fig. 2 nicht gezeigt) gesteuert wird. Der Anzeigeabschnitt 44 und der Markierring 46 sind teiltransparent ausgebildet, so dass Licht von der Leuchtdiode 22 durch den Anzeigeabschnitt 44 und den Markierring 46 aus dem Bedienelement 18 austreten und von einem Benutzer der Fernsteuereinheit 10 wahrgenommen werden kann. Die Leuchtdiode 22 bildet somit eine Beleuchtungseinrichtung, die eine Hintergrundbeleuchtung für den Anzeigeabschnitt 44 und den Markierring 46 gemäß einer Grundbeleuchtungscharakteristik erzeugt. Zusätzlich kann die Leuchtdiode 22 von der Auswerte- und Steuereinrichtung 50 zur Erzeugung eines Beleuchtungssignals angesteuert werden, das von der Drehstellung des Bedienelements 18 abhängig ist und eine von der Grundbeleuchtungscharakteristik verschiedene Beleuchtungscharakteristik besitzt, beispielsweise eine andere Farbe oder eine andere Helligkeit. Hierdurch kann beispielsweise ein Kameraassistent an dem von der Leuchtdiode 22 ausgesandten Beleuchtungssignal das Erreichen eines gewünschten Fokuswerts erkennen, welcher der Fokuswertmarkierung 26 an dem Markierring 46 entspricht.

Sofern wie bei der Ausführungsform gemäß Fig. 2 die jeweilige Markierung (z.B. Fokuswertmarkierung 26) nicht elektronisch dargestellt, sondern aufgrund einer händischen Anbringung an dem Markierring 46 angezeigt werden soll, so kann die genannte Auswerte- und Steuereinrichtung 50 dazu angepasst sein, ein Einprogrammieren von voreingestellten Drehstellungen des Bedienelements 18 zu ermöglichen, beispielsweise unter Zuhilfenahme der bereits im Zusammenhang mit Fig. 1 erläuterten Taste 20. Der Benutzer kann also vor dem Fernsteuerbetrieb der Auswerte- und Steuereinrichtung 50 diejenigen Drehstellungen des Bedienelements 18 einlernen, die den händisch angebrachten Markierungen entsprechen und deren Erreichen die Erzeugung eines Rückmeldesignals (z.B. Änderung einer Beleuchtungscharakteristik) auslösen soll.

Wie in Fig. 2 ferner gezeigt ist, kann zwischen der Leuchtdiode 22 und dem Anzeigeabschnitt 44 eine zylindermantelförmige Abdeckung 48 angeordnet sein, die mit dem Basisteil 12 fest verbunden ist. Die Abdeckung 48 kann auch eine andere Form aufweisen. Die Abdeckung 48 ist dazu ausgebildet, Beleuchtungssignale von der Beleuchtungseinrichtung (Leuchtdiode 22) nur in bestimmte Richtungen, etwa zum Benutzer hin, durchzulassen und in anderen Richtungen abzuschirmen. Dazu weist die Abdeckung 48 transparente oder zumindest teiltransparente Abschnitte sowie lichtundurchlässige Abschnitte auf. Insbesondere können transparente Abschnitte durch Aussparungen gebildet sein.

Die Abdeckung 48 kann an Übergängen zwischen transparenten bzw. teiltransparenten und lichtundurchlässigen Abschnitten einen Transparenzverlauf aufweisen, bei dem der Grad der Transparenz (d.h. das Transmissionsvermögen) kontinuierlich zunimmt oder abnimmt, beispielsweise durch unterschiedliche Pigmentdichten in oder an der Abdeckung 48. Dadurch können sanfte Übergänge zwischen den Richtungen, aus denen die Beleuchtungssignale wahrgenommen werden können, und den Richtungen, aus denen die Beleuchtungssignale nicht wahrgenommen werden können, erreicht werden. Ferner bewirken die kontinuierlichen Übergänge, dass während der Drehbewegung des Bedienelements 18 die Fokuswertmarkierung 26 (oder ein anderes auf der Anzeigeeinrichtung angezeigtes Symbol) allmählich wahrgenommen wird oder allmählich "verschwindet".

Die Abdeckung 48 bewirkt im Übrigen, dass Beleuchtungssignale im Wesentlichen ausschließlich in Richtung des Benutzers der Fernsteuereinheit 10 ausgesandt werden und keine negative Beeinträchtigung der Filmszene oder Störung der darin agierenden Schauspieler durch die Beleuchtungssignale erfolgt.

Fig. 3 zeigt ein Blockschaltbild mit den wesentlichen Bestandteilen einer der in Fig. 1 dargestellten Ausführungsform entsprechenden Fernsteuereinheit 10. Eine Auswerte- und Steuereinrichtung 50 ist mit einem Positionsgeber 52 verbunden, um die Drehstellung eines Bedienelements 18 relativ zu einem Basisteil 12 zu erfassen. Eine Beleuchtungseinrichtung 22 dient zum Beleuchten einer Anzeigeeinrichtung 16. Sofern es sich hierbei um eine elektronische Anzeigeeinrichtung 16 kandelt, kann diese, wie gezeigt, an dem Basisteil 12 angeordnet sein und von der Auswerte- und Steuereinrichtung 50 entsprechend der Drehstellung des Bedienelements 18 gesteuert werden. Mittels einer Taste 20 können der Auswerte- und Steuereinrichtung 50 in einem Konfigurationsmodus Voreinstellungen entsprechend einer Markierung an der Anzeigeeinrichtung 16 und/oder an dem Bedienelement 18 eingelernt werden. Die Auswerte- und Steuereinrichtung 50 erzeugt entsprechend der Drehstellung des Bedienelements 18 ein Steuersignal (z.B. Fokussteuersignal), das über eine Ausgabeeinrichtung 54 (z.B. Funksendeeinrichtung) an eine zugeordnete Filmkamera übermittelt wird.

Bei dem gezeigten Beispiel sind drei Rückmeldeeinrichtungen dargestellt, die alternativ zueinander oder in beliebiger Kombination auch kumulativ vorgesehen sein können. Diese Rückmeldeeinrichtungen werden von der Auswerte- und Steuereinrichtung 50 in Abhängigkeit von der Drehstellung des Bedienelements 18 zur Erzeugung wenigstens eines jeweiligen Rückmeldesignals für den Benutzer angesteuert. Die Rückmeldeeinrichtungen gemäß der Ausführungsform in Fig. 3 umfassen zum einen die genannte Beleuchtungseinrichtung 22 für die Anzeigeeinrichtung 16 und zum anderen eine Vibrationseinrichtung 42. Schließlich ist auch eine Rastschlusserzeugungseinrichtung 56 gezeigt, die zur selektiven Erzeugung wenigstens eines vom Benutzer fühlbaren Rastschlusses zwischen dem Bedienelement 18 und dem Basisteil 12 angesteuert werden kann. Ein derartiger Rastschluss kann beispielsweise mittels eines Elektromagneten, der mit einem Permanentmagneten zusammenwirkt, selektiv erzeugt werden.

Das jeweilige Rückmeldesignal wird insbesondere dann erzeugt, wenn das Bedienelement 18 eine voreingestellte Drehstellung erreicht, die einer Markierung an der Anzeigeeinrichtung 16 und/oder an dem Bedienelement 18 entspricht.

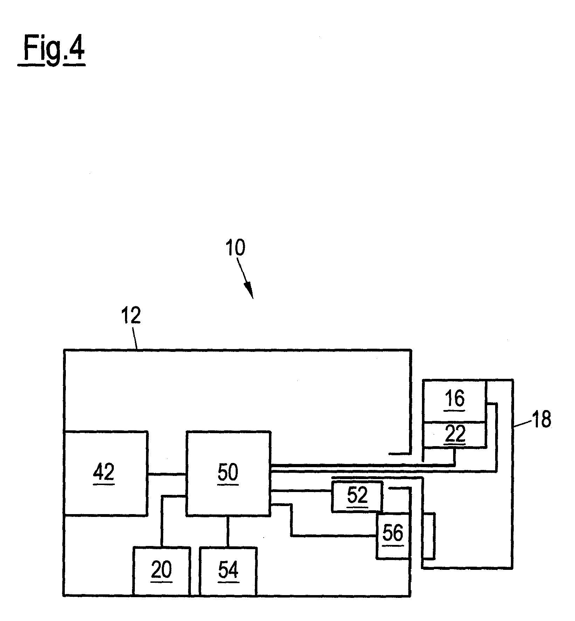

Das in Fig. 4 gezeigte Blockschaltbild stimmt weitgehend mit dem in Fig. 3 gezeigten Blockschaltbild überein, wobei die in Fig. 4 gezeigte Ausführungsform einer Fernsteuereinheit 10 gemäß Fig. 2 entspricht. Bei dieser Ausführungsform ist im Gegensatz zu Fig. 3 die Anzeigeeinrichtung 16 mit der ihr zugeordneten Beleuchtungseinrichtung 22 nicht an dem Basisteil 12, sondern an dem Bedienelement 18 angeordnet. Die Anzeigeeinrichtung 16 muss dabei nicht vollständig innerhalb des Bedienelements 18 angeordnet sein, sondern kann zumindest teilweise auch von außen an dem Bedienelement 18 angeordnet sein. Dasselbe gilt für die Beleuchtungseinrichtung 22, die aber, wie in Fig. 2 gezeigt, vorzugsweise innerhalb des Bedienelements 18 vorgesehen ist, so dass sie geschützt ist und die räumliche Ausbreitung ihres Lichts einfach kontrolliert werden kann. Die Beleuchtungseinrichtung 22 und die Anzeigeeinrichtung 16 sind auch in dieser Ausführungsform mit der Auswerte- und Steuereinrichtung 50 verbunden. Dabei kann die Verbindung am Übergang von dem Bedienelement 18 zu dem Basisteil 12 als Schleifkontakt oder auf andere Art der Drehbeweglichkeit des Bedienelements 18 gegenüber dem Basisteil 12 angepasst sein. Die Beleuchtungseinrichtung 22 und/oder die Anzeigeeinrichtung 16 können aber auch relativ zu dem Basisteil 12 fest angeordnet sein (wie es für die Beleuchtungseinrichtung 22 in Fig. 2 gezeigt ist), so dass eine starre Verbindung möglich ist.

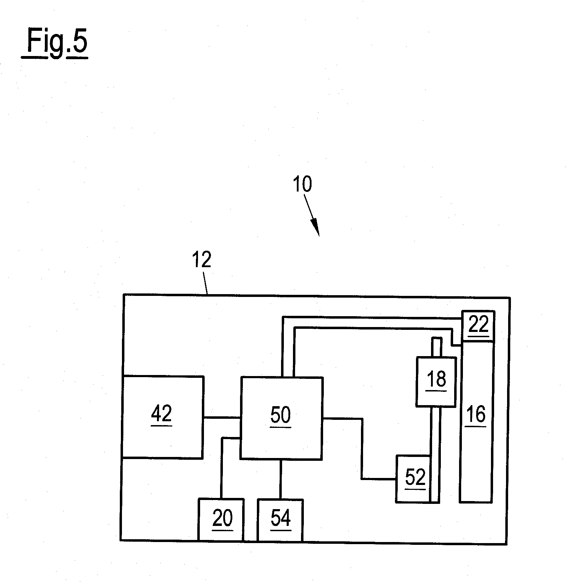

Fig. 5 zeigt ein Blockschaltbild einer Ausführungsform einer Fernsteuereinheit 10, bei der das Bedienelement 18, anders als bei den in den Fig. 1 bis 4 gezeigten Ausführungsformen, nicht als Stellrad, sondern als Schieberegler ausgeführt ist. Dieser Schieberegler kann um eine Strecke verschoben werden, die hier als gerade Linie ausgebildet ist, wobei einzelne Positionen entlang der Strecke verschiedenen Blendenwerten entsprechen. Bei dem hier dem Bedienelement 18 zugeordneten Positionsgeber 52 handelt es sich um einen Lineargeber, der die Position des Schiebereglers entlang der genannten Strecke erfasst. Benachbart zu dem Schieberegler sind an dem Basisteil 12 die Anzeigeeinrichtung 16 und die zugeordnete Beleuchtungseinrichtung 22 vorgesehen. Die Anzeigeeinrichtung 16 und/oder die Beleuchtungseinrichtung 22 können aber auch an dem Bedienelement 18 (Schieberegler) vorgesehen sein. Eine Rastschlusseinrichtung 56 ist in Fig. 5 nicht gezeigt, kann aber auch bei dieser Ausführungsform vorgesehen sein, beispielsweise als entlang der Strecke des Bedienelements 18 an dem Basisteil 12 angeordnete steuerbare Elektromagneten, die mit einem Permanentmagneten an dem Bedienelement 18 zusammenwirken können. Die übrigen Bestandteile der in Fig. 5 gezeigten Ausführungsform entsprechen mit denselben Bezugszeichen gekennzeichneten Bestandteilen vorangehender Figuren.

### Bezugszeichenliste

- 10: Fernsteuereinheit
- 12: Basisteil
- 14: Griffteil
- 16: Anzeigeeinrichtung
- 18: Bedienelement
- 20: Taste
- 22: Leuchtdiode
- 24: Fokusskala
- 26, 28: Fokuswertmarkierung
- 30: Fokuswert
- 32: Ablesemarke
- 40: Vertiefung
- 42: Vibrationseinrichtung
- 44: Anzeigeabschnitt
- 46: Markierring
- 48: Abdeckung
- 50: Auswerte- und Steuereinrichtung
- 52: Positionsgeber
- 54: Ausgabeeinrichtung
- 56: Rastschlusserzeugungseinrichtung
- D: Drehachse

## Patentansprüche

1. Objektiv- und Kamera-Fernsteuereinheit (10), mit einem Basisteil (12), einem relativ zum Basisteil (12) beweglichen Bedienelement (18), einer Auswerte- und Steuereinrichtung (50) zum Erzeugen eines Steuersignals entsprechend der Stellung des Bedienelements (18), und einer Ausgabeeinrichtung (54) zum Ausgeben des Steuersignals an eine zugeordnete Kamera;
**gekennzeichnet durch**
eine Rückmeldeeinrichtung, wobei die Auswerte- und Steuereinrichtung (50) dazu angepasst ist, in Abhängigkeit von der Stellung des Bedienelements (18) die Rückmeldeeinrichtung zur Erzeugung wenigstens eines von einem Benutzer der Fernsteuereinheit wahrnehmbaren, insbesondere optischen oder haptischen, Rückmeldesignals anzusteuern.

2. Fernsteuereinheit (10) nach Anspruch 1,
wobei das Bedienelement (18) relativ zu dem Basisteil (12) um eine Drehachse (D) drehbar und die genannte Stellung des Bedienelements (18) eine Drehstellung des Bedienelements (18) ist, oder wobei das Bedienelement (18) relativ zu dem Basisteil (12) entlang einer Strecke verschiebbar und die genannte Stellung des Bedienelements (18) eine Schiebestellung des Bedienelements (18) ist.

3. Fernsteuereinheit (10) nach Anspruch 1 oder 2,
wobei die Auswerte- und Steuereinrichtung (50) dazu angepasst ist, in Abhängigkeit von der Stellung des Bedienelements (18) die Rückmeldeeinrichtung zur Erzeugung von unterschiedlichen Rückmeldesignalen anzusteuern.

4. Fernsteuereinheit (10) nach Anspruch 3,
wobei die Auswerte- und Steuereinrichtung (50) dazu angepasst ist, bei Erreichen einer vorbestimmten ersten Stellung des Bedienelements (18) die Rückmeldeeinrichtung zur Erzeugung eines ersten Rückmeldesignals anzusteuern und bei Erreichen einer vorbestimmten zweiten Stellung des Bedienelements (18) und/oder bei Erreichen einer vorbestimmten Stellungsdifferenz des Bedienelements (18) relativ zu der vorbestimmten ersten Stellung die Rückmeldeeinrichtung zur Erzeugung eines zweiten Rückmeldesignals anzusteuern, welches sich von dem ersten Rückmeldesignal unterscheidet.

5. Fernsteuereinheit (10) nach einem der vorhergehenden Ansprüche, wobei die Auswerte- und Steuereinrichtung (50) dazu angepasst ist, über zumindest einen Bereich von verschiedenen Stellungen des Bedienelements (18) relativ zum Basisteil (12) die Rückmeldeeinrichtung zur Erzeugung des wenigstens einen Rückmeldesignals anzusteuern; und/oder
wobei die Rückmeldeeinrichtung dazu angepasst ist, das Rückmeldesignal zu erzeugen, ohne einer Bewegung des Bedienelements (18) relativ zum Basisteil (12) entgegenzuwirken.

6. Fernsteuereinheit (10) nach einem der vorhergehenden Ansprüche,
wobei die Rückmeldeeinrichtung eine Vibrationseinrichtung (42) umfasst, die zur Erzeugung wenigstens eines von dem Benutzer der Fernsteuereinheit fühlbaren Vibrationssignals ansteuerbar ist.

7. Fernsteuereinheit (10) nach Anspruch 6,
wobei die Vibrationseinrichtung (42) an einer Außenseite des Basisteils (12) oder an einer Außenseite des Bedienelements (18) angeordnet ist.

8. Fernsteuereinheit (10) nach einem der vorhergehenden Ansprüche,
wobei die Rückmeldeeinrichtung eine Beleuchtungseinrichtung (22) umfasst, die zur Erzeugung wenigstens eines von einem Benutzer der Fernsteuereinheit sichtbaren Beleuchtungssignals ansteuerbar ist.

9. Fernsteuereinheit (10) nach Anspruch 8,
wobei die Beleuchtungseinrichtung (22) dazu angepasst ist, einen Teil der Fernsteuereinheit (10) gemäß einer Grundbeleuchtungscharakteristik zu beleuchten, und wobei das wenigstens eine Beleuchtungssignal eine von der Grundbeleuchtungscharakteristik verschiedene Beleuchtungscharakteristik aufweist, insbesondere eine andere Farbe oder Helligkeit.

10. Fernsteuereinheit (10) nach Anspruch 8 oder 9,
wobei die Fernsteuereinheit (10) eine Anzeigeeinrichtung (16) zum Anzeigen wenigstens eines Symbols (24, 26, 28) aufweist, dessen Position oder Wert der Stellung des Bedienelements (18) oder einer gewünschten Stellung des Bedienelements (18) entspricht, wobei die Beleuchtungseinrichtung (22) dazu angepasst ist, die Anzeigeeinrichtung (16) teilweise oder vollständig zu beleuchten,
wobei die Beleuchtungseinrichtung (22) vorzugsweise dazu angepasst ist, eine Hintergrundbeleuchtung für die Anzeigeeinrichtung (16) zu erzeugen.

11. Fernsteuereinheit (10) nach Anspruch 10,
wobei die Fernsteuereinheit (10) eine Abdeckeinrichtung (48) aufweist, die wenigstens einen transparenten oder teiltransparenten Abschnitt und einen lichtundurchlässigen Abschnitt aufweist, um die von der Beleuchtungseinrichtung (22) erzeugte Beleuchtung der Anzeigeeinrichtung (16) für unterschiedliche Emissionsrichtungen der Beleuchtung oder unterschiedliche Bereiche der Anzeigeeinrichtung (16) selektiv durchzulassen oder abzuschirmen, wobei zwischen dem transparenten oder teiltransparenten Abschnitt und dem lichtundurchlässigen Abschnitt vorzugsweise ein kontinuierlicher Verlauf einer Änderung des Transparenzgrades vorgesehen ist.

12. Fernsteuereinheit (10) nach einem der vorhergehenden Ansprüche,
wobei die Rückmeldeeinrichtung eine Rastschlusserzeugungseinrichtung (56) umfasst, die zur selektiven Erzeugung wenigstens eines von einem Benutzer der Fernsteuereinheit fühlbaren Rastschlusses des Bedienelements (18) mit dem Basisteil (12) ansteuerbar ist.

13. Fernsteuereinheit (10) nach einem der vorhergehenden Ansprüche,
wobei die Fernsteuereinheit (10) eine elektronische Anzeigeeinrichtung (16) zum elektronischen Darstellen wenigstens eines Symbols (24, 26, 28) aufweist, wobei die Auswerte- und Steuereinrichtung (50) dazu angepasst ist, die Position oder den Wert des dargestellten Symbols (24, 26, 28) in Abhängigkeit von einer Änderung der Stellung des Bedienelements (18) zu verändern, und wobei die Auswerte- und Steuereinrichtung (50) ferner dazu angepasst ist, die Rückmeldeeinrichtung (42) zur Erzeugung des Rückmeldesignals anzusteuern, wenn die Stellung des Bedienelements (18) einer vorbestimmten Position oder einem vorbestimmten Wert des dargestellten Symbols (24, 26, 28) entspricht.

14. Fernsteuereinheit (10) nach Anspruch 13,
wobei die Position oder der Wert des an der elektronischen Anzeigeeinrichtung (16) dargestellten Symbols (24) einen Einstellwert definiert, und wobei das Steuersignal für die Kamera den Einstellwert enthält.

15. Fernsteuereinheit (10) nach Anspruch 14,
wobei an dem Basisteil (12) eine der elektronischen Anzeigeeinrichtung (16) zugeordnete Ablesemarke (32) vorgesehen ist oder die elektronische Anzeigeeinrichtung (16) zum Darstellen einer Ablesemarke angepasst ist, wobei die Relativposition des dargestellten Symbols (24, 26, 28) in Bezug auf die Ablesemarke (32) den Einstellwert definiert und/oder dem Kriterium für das Erzeugen des Rückmeldesignals entspricht.
